# EUROPÄISCHE PATENTSCHRIFT

(11) **EP 2 049 215 B1**
(45) Veröffentlichungstag und Bekanntmachung des Hinweises auf die Patenterteilung: **15.06.2011**
(21) Anmeldenummer: 07786554.1
(22) Anmeldetag: 03.08.2007
(51) Int. Cl.: B01D 9/00, C13B 30/00, C13B 25/00

(54) **HEIZKAMMER FÜR EINEN KRISTALLISATIONSVERDAMPFERS**
HEATING CHAMBER FOR A CRYSTALLIZATION EVAPORATOR
CHAMBRE DE CHAUFFAGE POUR UN ÉVAPORATEUR À CRISTALLISATION

(30) Priorität: 03.08.2006 DE 102006036669
(43) Veröffentlichungstag der Anmeldung: 22.04.2009
(73) Patentinhaber: BWS Technologie GmbH, 41515 Grevenbroich (DE)
(72) Erfinder: GOEDDERTZ, Leo, 50259 Pulheim (DE)
(74) Vertreter: Fischer, Ernst
(86) Internationale Anmeldenummer: PCT/EP2007/006897
(87) Internationale Veröffentlichungsnummer: WO 2008/015019

(56) Entgegenhaltungen:
- DE-B- 1 274 050
- DE-C- 649 751
- GB-A- 322 280

## Beschreibung

### Hintergrund der Erfindung

Die Erfindung betrifft eine Heizkammer für einen Kristallisationsverdampfers zum Eindampfen von Flüssigkeiten wie Zuckersaft, bei der mindestens ein rohrförmiges Heizelement durch geeignete Mittel in einem Kochraum gehalten ist.

Heizkammern der oben genannten Art sind aus DE 1 031 762 PS, DE 1 054 065 PS und DE 212 238 PS bekannt. Sie dienen beispielsweise in der Zuckerindustrie zum Verkochen von Zuckersaft einer bestimmten Konzentration zwecks Bildung von Kristallen. Sie weisen eine in einem Kochraum über einem Boden des Kristallisationsverdampfers bzw. Vakuumkochers angeordnete dampfbeheizbare Heizkammer auf, die gemäß dem Stand der Technik als Ringheizkammer gestaltet und aus einzelnen ringförmigen Heizelementen gestaltet ist, die in zwei gegenüberliegende Kammern eingeschweißt sind. Eine der Kammern dient zur Heizdampfzuführung und die andere Kammer dient zur Kondensat- und Gasableitung. Oberhalb der Heizkammer befindet sich der Saft- und Brüdenraum. Der Zuckersaft, der den Kristallisationsverdampfer bzw. Vakuumkocher annähernd zur Hälfte füllt, wird zwischen Heizelementen der Heizkammer angewärmt und steigt dadurch nach oben. Dort gibt er während der Verdampfung Wärme ab, sinkt durch einen von Heizelementen freien Mittelteil des Kochraums zu Boden und steigt dann durch die neuerliche Erwärmung zwischen den Heizelemente der Heizkammer wieder hoch. Damit eine gleichmäßige Kristallbildung erreicht wird, soll diese Zirkulationsbewegung des Zuckersaftes über die gesamte Querschnittsfläche des Kochraumes und der darin gehalterten Heizkammer gleich stark erfolgen. Dazu ist es insbesondere erforderlich, dass innerhalb der Heizkammer eine gleichmäßige Temperaturverteilung vorherrscht. Auch die Strömungswiderstände innerhalb einzelner rohrförmiger Heizelemente sollen weitgehend gleich groß sein.

Die DE 1274050B beschreibt eine Heizkammer nach dem Oberbegriff von Anspruch 1.

### Zugrundeliegende Aufgabe

Der Erfindung liegt die Aufgabe zugrunde, eine Heizkammer für einen Kristallisationsverdampfer zum Eindampfen von Flüssigkeiten wie Zuckersaft zu schaffen, bei der die oben genannten Nachteile überwunden sind. Die Heizkammer soll auf besonders kostengünstige Weise herstellbar sein und zugleich für eine gleichmäßige Saftkonzentration sorgen.

### Erfindungsgemäße Lösung

Die Aufgabe ist erfindungsgemäß mit einer Heizkammer für einen Kristallisationsverdampfer zum Eindampfen von Flüssigkeiten wie Zuckersaft gemäß Anspruch 1. Vorteilhafte Weiterbildungen der Erfindung sind in den abhängigen Ansprüchen beschrieben.

Die erfindungsgemäßen rohrförmigen Heizelemente sind derart angeordnet und miteinander verbunden, dass eine besonders kleine Ablagerungsfläche an der Oberseite der Heizkammer entsteht.

Darüber hinaus ermöglicht die erfindungsgemäße Lösung das Unterbringen einer besonders großen, wenn nicht sogar der größtmöglichen Anzahl von rohrförmigen Heizelementen auf einer vorgegebenen Querschnittsfläche. Mehr rohrförmige Heizelemente bzw. Rohre bedeuten mehr Heizfläche. Durch mehr Heizfläche können die Kochzeit und damit der Energieverbrauch reduziert werden.

Erfindungsgemäß bevorzugt sind die Schweißnähte derart ausgebildet, dass sie die Stirnseiten der Endbereiche der rohrförmigen Heizelemente im Wesentlichen überdecken. Die derart ausgebildeten Schweißnähte stellen eine fluiddichte Verbindung der rohrförmigen Heizelemente an deren Enden bzw. Stirnseiten sicher und sorgen aufgrund einer bevorzugt konvexen Außenfläche der Schweißnähte für eine vorteilhafte Strömungssituation an diesen ansonsten kantigen Stirnseiten.

Besonders bevorzugt sind die Mehrecksformen als regelmäßige Mehrecke mit jeweils sechs Ecken gestaltet. Derartige Sechsecke ermöglichen, wie oben erwähnt, eine besonders große Anzahl an Rohren. Sie können kostengünstig und prozesssicher ausgeformt werden und behalten dabei weitgehend eine gleichmäßig dicke Wandstärke bei. Dies ist vorteilhaft im Hinblick auf das Verschweißen der Bauteile und den Wärmeübergang an den rohrförmigen Heizelementen.

Um eine fertigungstechnisch günstige Montage der zu verschweißenden rohrförmigen Heizelemente zu ermöglichen, ist an beiden Endbereichen jedes einzelnen rohrförmigen Heizelements bevorzugt jeweils eine Mehrecksform ausgebildet und die Mehrecksformen jedes einzelnen rohrförmigen Heizelements sind vorteilhaft in dessen Querschnitt betrachtet deckungsgleich ausgerichtet. Die rohrförmigen Heizelemente können dann mit ihren beiden eckigen Endbereichen wie Bausteine nebeneinander aufgestellt und nachfolgend verschweißt werden.

An beiden Endbereichen jedes einzelnen rohrförmigen Heizelements ist bevorzugt jeweils eine Mehrecksform ausgebildet und die Mehrecksformen jedes einzelnen rohrförmigen Heizelements sind vorteilhaft an einer Fertigungseinrichtung in einer einzigen Aufspannung des jeweiligen rohrförmigen Heizelements an diesem ausgebildet worden. Durch ein derartiges Ausbilden der Mehrecksformen an beiden Endbereichen in nur einer Aufspannung kann ein Versatz zwischen der Ausrichtung der Mehrecksformen vermieden werden, wie er sonst bei einem Ausbilden der Mehrecksformen in aufeinander folgenden Fertigungsschritten mit einem dazwischen stattfindenden Umspannen der Fall war. Darüber hinaus werden die Mehrecksformen an den beiden Endbereichen der rohrförmigen Heizelemente bevorzugt mittels zweier Werkzeuge ausgebildet, die gleichzeitig an die Stirnseiten des jeweiligen rohrförmigen Heizelements herangefahren werden. Besonders bevorzugt wird die einzelne Mehrecksform mittels einer Kaltverformung durch einen Pressstempel ausgebildet, der mit entsprechenden Stempelschrägen in das Innere eines Endbereiches eingepresst und nach der plastischen Verformung des Endbereiches wieder aus diesem herausgezogen wird. Dieses Kaltverformen erfolgt wie erwähnt besonders bevorzugt an beiden Endbereichen eines rohrförmigen Heizelementes gleichzeitig, wobei es zu einem Abgleich der Reib- und Verformungskräfte an beiden Pressstempeln kommt und die beiden Mehrecksformen dadurch besonders formgleich ausgebildet werden können.

Daher ist es auch besonders bevorzugt, dass die Mehrecksform durch eine Aufweitung des Materials des rohrförmigen Heizelements ausgebildet ist, welche von einer kreiszylindrischen Grundform des rohrförmigen Heizelements ausgeht.

In umfangreichen Versuchen konnte ermittelt werden, dass die Aufweitung besonders vorteilhaft im Längsschnitt des jeweiligen rohrförmigen Heizelements betrachtet, sich konisch bis ans Ende des rohrförmigen Heizelements erstreckt. Alternativ kann die Aufweitung am Ende auch einen achsparallelen oder nahezu achsparallelen Rohrabschnitt aufweisen, an dem dann die genannten Schweißnähte ausgebildet werden.

Die Aufweitung weist in den Ecken des Mehrecks zur Längsachse des rohrförmigen Heizelements einen Konuswinkel von zwischen 10° und 16°, bevorzugt zwischen 12° und 14°, am bevorzugtesten von zirka 13° auf. Dies ist fertigungstechnisch und auch strömungstechnisch vorteilhaft.

Bei dem Verfahren zum Herstellen einer erfindungsgemäßen Heizkammer eines Kristallisationsverdampfer wird aus den oben bereits genannten Gründen an beiden Endbereichen jedes einzelnen rohrförmigen Heizelements jeweils eine Mehrecksform ausgebildet und die Mehrecksformen jedes einzelnen rohrförmigen Heizelements werden in einer einzigen Aufspannung des jeweiligen rohrförmigen Heizelements an diesem ausgebildet.

### Kurzbeschreibung der Zeichnungen

Nachfolgend wird ein Ausführungsbeispiel einer erfindungsgemäßen Heizkammer für einen Kristallisationsverdampfer zum Eindampfen von Flüssigkeiten anhand der beigefügten schematischen Zeichnungen näher erläutert. Es zeigt:

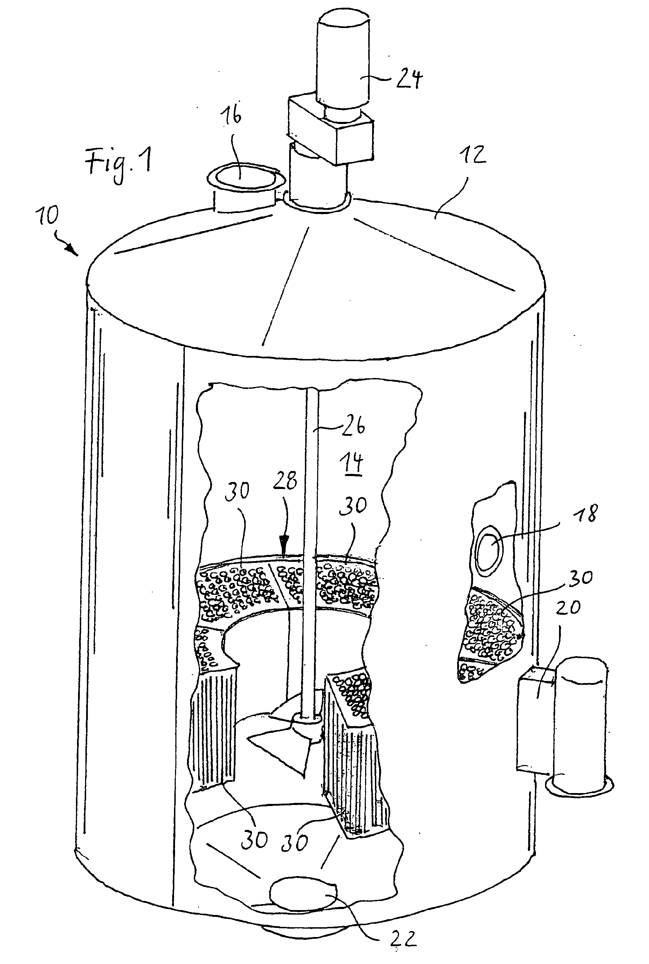

- Fig. 1: eine teilweise aufgebrochene perspektivische Ansicht eines Kristallisations- verdampfers zum Eindampfen von Flüssigkeiten mit einer Heizkammer ge- mäß der Erfindung,
- Fig. 2: eine perspektivische Ansicht eines Segments der Heizkammer gemäß Fig. 1,

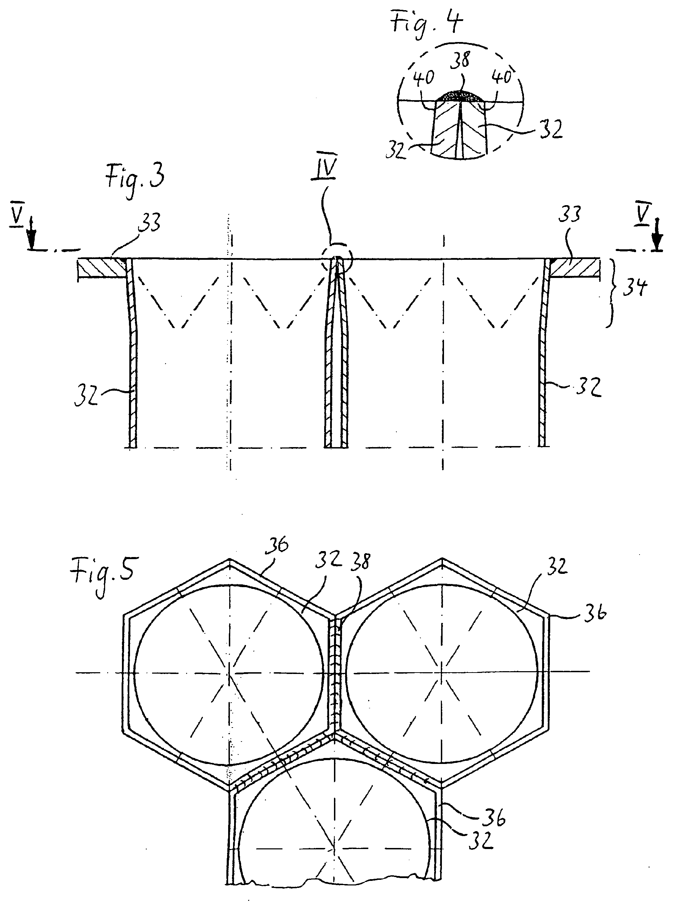

- Fig. 3: einen oberen Endbereich zweier rohrförmiger Heizelemente der Heizkam- mer gemäß Fig. 2,
- Fig. 4: das Detail IV in Fig. 3 und
- Fig. 5: die Ansicht V - V in Fig. 3.

### Detaillierte Beschreibung des Ausführungsbeispiels

In den Fig. ist ein Kristallisationsverdampfers 10 zum Eindampfen von Flüssigkeiten veranschaulicht, welcher mit einem kesselförmigen Außengehäuse 12 einen Kochraum 14 umfasst. An dem Außengehäuse 12 sind diverse Anschlüsse 16, 18, 20 und 22 sowie ein Antrieb 24 eines Rührstabes 26 vorgesehen. Im Inneren des Kochraumes 14 ist eine in der Grundform ringförmige Heizkammer 28 angeordnet, welche, wie eingangs erläutert, zum Erwärmen von Flüssigkeiten wie Zuckersaft dient, um diesen im Kochraum 14 einzudampfen.

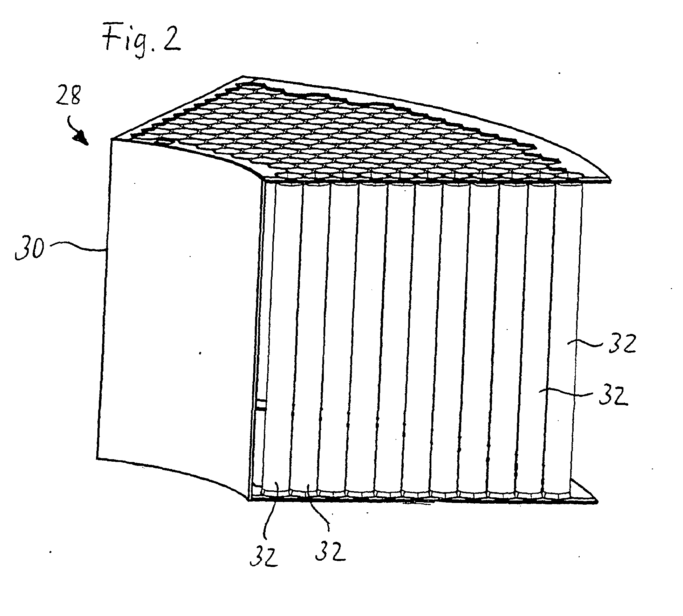

Die Heizkammer 28 ist dabei aus insgesamt sechs Ringsegmenten 30 gebildet, von denen eines in Fig. 2 darstellt ist.

Das einzelne Ringsegment 30 der Heizkammer 28 weist mehrere rohrförmige Heizelemente 32 auf, welche jeweils innerhalb einer Randplatte 33 an einem stirnseitigen Endbereich 34 mit einer Mehrecksform 36 in Gestalt eines regelmäßigen Sechsecks gestaltet und an dieser Mehrecksform aneinander anliegend und einander gegenseitig unmittelbar abstützend mittels einer Schweißnaht 38 miteinander verbunden sind.

Die Schweißnähte 38 sind derart ausgebildet, dass sie die Stirnseiten 40 der Endbereiche 34 der rohrförmigen Heizelemente 32 im Wesentlichen überdecken.

Die Mehrecksformen 36 sind dabei an beiden Endbereichen 34 jedes einzelnen rohrförmigen Heizelements 32 ausgebildet und an jedem einzelnen rohrförmigen Heizelement 32 in dessen Querschnitt betrachtet deckungsgleich ausgerichtet. Auf diese Weise ergibt sich an beiden Stirnseiten der rohrförmigen Heizelemente 32 ein in Längsrichtung betrachtet deckungsgleiches Wabenmuster, dessen einzelne Waben nur durch die genannten Schweißnähte 38 verbunden sind.

Um die Wabenmuster besonders gleichmäßig und präzise ausgerichtet ausbilden zu können sind die Mehrecksformen 36 jedes einzelnen rohrförmigen Heizelements 32 an einer Fertigungseinrichtung in einer einzigen Aufspannung des jeweiligen rohrförmigen Heizelements 32 an diesem ausgebildet worden. Dabei sind die Mehrecksformen 36 durch eine Aufweitung des Materials des rohrförmigen Heizelements 32 ausgehend von einer kreiszylindrischen Grundform des rohrförmigen Heizelements 32 mittels zweier (nicht dargestellter) Pressstempel ausgebildet worden. Die Pressstempel haben bei diesem Vorgang die Endbereiche 34 so aufgeweitet, dass die Aufweitung im Längsschnitt des jeweiligen rohrförmigen Heizelements betrachtet, sich mit einem Konuswinkel von zirka 13° bis an das Ende bzw. die Stirnseite 40 des jeweiligen rohrförmigen Heizelements 32 erstreckt.

### Bezugszeichenliste

- 10: Kristallisationsverdampfer
- 12: Außengehäuse
- 14: Kochraum
- 16: Anschluss
- 18: Anschluss
- 20: Anschluss
- 22: Anschluss
- 24: Antrieb
- 26: Rührstab
- 28: Heizkammer
- 30: Ringsegment
- 32: Heizelement
- 33: Randplatte
- 34: Endbereich
- 36: Schweißnaht
- 38: Stirnseite

## Patentansprüche

1. Heizkammer (28) für einen Kristallisationsverdampfer (10) zum Eindampfen von Flüssigkeiten wie Zuckersaft, bei der mindestens ein rohrförmiges Heizelement (32) durch geeignete Mittel in einem Kochraum (14) gehalten ist,
wobei mehrere rohrförmige Heizelemente (32) vorgesehen sind, welche jeweils an einem stirnseitigen Endbereich (34) mit einer Mehrecksform (36) gestaltet und an dieser Mehrecksform (36) aneinander anliegend und einander gegenseitig unmittelbar abstützend mittels einer Schweißnaht (38) miteinander verbunden sind, wobei die Mehrecksform (36) durch eine Aufweitung des Materials des rohrförmigen Heizelements (32) ausgebildet ist, welche von einer kreiszylindrischen Grundform des rohrförmigen Heizelements (32) ausgeht und, im Längsschnitt des jeweiligen rohrförmigen Heizelements (32) betrachtet, sich konisch bis ans Ende (40) des rohrförmigen Heizelements (32) erstreckt, wobei die Aufweitung in den Ecken der Mehrecksform (36) zur Längsachse des rohrförmigen Heizelements (32) einen Konuswinkel aufweist, **dadurch gekennzeichnet, dass** der Konuswinkel zwischen 10° und 16° beträgt.

2. Heizkammer nach Anspruch 1,
wobei die Schweißnähte (38) die Stirnseiten (40) der Endbereiche (34) der rohrförmigen Heizelemente (32) im Wesentlichen überdecken.

3. Heizkammer nach Anspruch 1 oder 2,
wobei die Mehrecksformen (36) als regelmäßiges Mehreck mit jeweils sechs Ecken gestaltet sind.

4. Heizkammer nach einem der Ansprüche 1 bis 3,
wobei an beiden Endbereichen (34) jedes einzelnen rohrförmigen Heizelements (32) jeweils eine Mehrecksform (36) ausgebildet ist und die Mehrecksformen (36) jedes einzelnen rohrförmigen Heizelements (32) in dessen Querschnitt betrachtet deckungsgleich ausgerichtet sind.

5. Heizkammer nach einem der Ansprüche 1 bis 4,
wobei die Aufweitung in den Ecken der Mehrecksform (36) zur Längsachse des rohrförmigen Heizelements (32) einen Konuswinkel von zwischen 12° und 14°, am bevorzugtesten von zirka 13° aufweist.

## Claims

1. Heating chamber (28) for a crystallisation vaporiser (10) for evaporating of liquids like sugar juice, in which at least one tubular heating element (32) is supported by appropriate means in a boiling cavity (14), wherein additional tubular heating elements (32) are provided, each shaped in a polygonal form (36) at a front end region (34) and adjacent and mutually supported and connected by a weld joint (38) at this polygonal form (36), wherein the polygonal form (36) is formed by a widening of the material of the tubular heating element (32), which originates from a circular-cylindrical base of the tubular heating element (32) and, viewed in the longitudinal section of the tubular heating element (32), extends conically to the end (40) of the tubular heating element (32), wherein the widening in the corners of the polygonal form (36) and the longitudinal section of the tubular heating element (32) include a conical angle, which is **characterised by** the conical angle between 10° and 16°.

2. Heating chamber according to claim 1,
wherein the weld joints (38) substantially cover the front side (40) of the front regions (34) of the tubular heating elements (32).

3. Heating chamber according to claim 1 or 2,
wherein the polygonal forms (36) are regular polygons with six sides.

4. Heating chamber according to claims 1 to 3,
wherein at both front regions (34) of each tubular heating element (32) a polygonal form (36) is formed and the polygonal forms (36) of each tubular heating element (32) are congruent viewed in their cross section.

5. Heating chamber according to claims 1 to 4,
wherein the widening in the corners of the polygonal form (36) and the longitudinal section of the tubular heating element(32) include a conical angle between 12° and 14°, most preferably approx. 13°.

## Revendications

1. Chambre (28) de chauffage pour un évaporateur (10) à cristallisation, pour l'évaporation de liquides comme du jus sucré, dans laquelle au moins un élément (32) tubulaire de chauffage est maintenu par des moyens appropriés dans une chambre (14) de cuite, plusieurs éléments (32) tubulaires de chauffage étant prévues, qui sont conformés respectivement sur une zone (34) d'extrémité du côté frontal en ayant une forme (36) polygonale et qui sont reliés entre eux au moyen d'un cordon (38) de soudure en s'appliquant les uns contre les autres sur cette forme (36) polygonale et en s'appuyant directement mutuellement les uns contre les autres, la forme (36) polygonale étant formée par un élargissement du matériau de l'élément (32) tubulaire de chauffage, élargissement qui part d'une forme de base cylindrique de section circulaire de l'élément (32) tubulaire de chauffage et qui, considéré en coupe longitudinale de l'élément (32) tubulaire de chauffage, s'étend coniquement jusau'à l'extrémité (40) de l'élément (32) tubulaire de chauffage, l'élargissement faisant, aux sommets de la forme (36) polygonale, un angle de cône avec l'axe longitudinal de l'élément (32) tubulaire de chauffage, **caractérisée en ce que** l'angle de cône est compris entre 10° et 16°.

2. Chambre de chauffage suivant la revendication 1,
dans laquelle les cordons (38) de soudure recouvrent sensiblement les côtés (40) frontaux des zones (34) d'extrémité des éléments (32) tubulaires de chauffage.

3. Chambre de chauffage suivant la revendication 1 ou 2,
dans laquelle les formels (36) polygonales sont conformées en polygones réguliers ayant respectivement six sommets.

4. Chambre de chauffage suivant l'une des revendications 1 à 3,
dans laquelle une forme (36) polygonale est formée respectivement sur les deux zones (34) d'extrémité de chaque élément (32) tubulaire de chauffage individuel et les formes (36) polygonales de chaque élément (32) tubulaire de chauffage individuel sont, considérées dans leur section transversale, orientées en coïncidence.

5. Chambre de chauffage suivant l'une des revendications 1 à 4,
dans laquelle l'élargissement aux sommes de la forme (36) polygonale fait, avec l'axe longitudinal de l'élément (32) tubulaire de chauffage, un angle de cône compris entre 12° et 14° et, de la manière la plus préférée, d'environ 13°.
